# EUROPÄISCHE PATENTSCHRIFT

(11) **EP 4 140 822 B1**
(45) Veröffentlichungstag und Bekanntmachung des Hinweises auf die Patenterteilung: **09.07.2025**
(21) Anmeldenummer: 21193020.1
(22) Anmeldetag: 25.08.2021
(51) Int. Cl.: B60R 11/04, B60S 1/08

(54) **SENSORVERBAUSYSTEM FÜR EIN FAHRZEUG**
SENSOR ASSEMBLY SYSTEM FOR A VEHICLE
SYSTÈME D'INSTALLATION DE CAPTEUR POUR UN VÉHICULE

(43) Veröffentlichungstag der Anmeldung: 01.03.2023
(73) Patentinhaber: Bayerische Motoren Werke Aktiengesellschaft, 80809 München (DE)
(72) Erfinder: Schuster, Benjamin, 80992 München (DE); Mayr, Maximilian, 85457 Wörth (DE)

(56) Entgegenhaltungen:
- EP-A1- 3 173 289
- EP-A1- 3 173 290
- WO-A1-01/05636
- WO-A2-2008/068573
- DE-B3- 102012 011 596

## Beschreibung

Die vorliegende Erfindung betrifft ein Sensorverbausystem für ein Fahrzeug.

Die stetige Zunahme von Fahrerassistenzsystemen im Fahrzeug erfordert umfangreiche Umfeldsensorik. Hierzu zählen beispielsweise unter anderem Kameras, Radar-, Lidar- und Ultraschall-Sensoren. Um eine korrekte Funktionsweise der Fahrerassistenzsysteme zu gewährleisten, ist eine möglichst exakte Erfassung der Umgebung des Fahrzeugs nötig. Dabei ist insbesondere wichtig, dass die entsprechenden Umfeldsensoren bestimmungsgemäß verbaut und ausgerichtet sind. Die Montage von Umfeldsensoren erfordert im Rahmen einer Großserienproduktion eine einfache Verbauweise, welche möglichst fehlerunanfällig ist.

Die Druckschrift DE 10 2013 200 966 A1 betrifft eine Modulvorrichtung für ein Kamerasystem mit einer Gehäuseeinrichtung, die eine innere Öffnung aufweist und welche dazu ausgelegt ist, eine Justage einer Einbauposition der Modulvorrichtung in einem Kraftfahrzeug zu ermöglichen. Die Modulvorrichtung umfasst eine Sensorhalterungseinrichtung, welche einen oberen Bereich und einen Sockelbereich aufweist und welche mit der Gehäuseeinrichtung über mindestens ein Auflageelement gekoppelt ist und welche dazu ausgelegt ist, einen Bildsensor aufzunehmen. Zudem umfasst eine derartige Modulvorrichtung eine Objektiveinrichtung, welche mit der Sensorhalterungseinrichtung an dem oberen Bereich über mindestens ein Verbindungselement gekoppelt ist und welche dazu ausgelegt ist, eine optische Abbildung auf dem Bildsensor zu erzeugen, und mit einer Haltefedereinrichtung, welche an den Sockelbereich der Sensorhalterungseinrichtung gekoppelt ist und welche dazu ausgelegt ist, den Bildsensor mit der wärmeleitenden Zwischenschicht an die Sensorhalterungseinrichtung mittels Federkraft anzupressen und dabei einen Wärmeleitungspfad über die wärmeleitende Zwischenschicht auszubilden. Die EP3173290A1 offenbart ein Sensorverbausystem nach dem Oberbegriff von Anspruch 1.

Es ist Aufgabe der vorliegenden Erfindung, ein Sensorverbausystem für einen Umfeldsensor eines Fahrzeugs zu schaffen, welche eine schnelle, toleranzarme und korrekte Montage des Umfeldsensors gewährleistet und welche es erlaubt, den montierten Umfeldsensor im Rahmen von Servicearbeiten auf schnelle und einfache Weise von der Befestigungsvorrichtung zu lösen.

Diese Aufgabe wird erfindungsgemäß durch ein Sensorverbausystem mit den Merkmalen gemäß dem unabhängigen Anspruch gelöst.

Vorteilhafte Weiterbildungen der vorliegenden Erfindung sind in den abhängigen Ansprüchen angegeben.

Eine Befestigungsvorrichtung für einen Umfeldsensor eines Fahrzeugs umfasst eine Sensorhalteeinrichtung mit einem Aufnahmebereich, in welchem der Umfeldsensor bei einer bestimmungsgemäßen Befestigung an der Sensorhalteeinrichtung zumindest bereichsweise anordenbar ist. Zudem umfasst die Befestigungsvorrichtung eine Haltefedereinrichtung, welche dazu eingerichtet ist, den Umfeldsensor zur bestimmungsgemäßen Befestigung in dem Aufnahmebereich über eine Federkraft zu halten. Dabei weist die Haltefedereinrichtung an einem ersten Ende ein Lagerungselement auf, mittels welchem die Haltefedereinrichtung drehbar an der Sensorhalteeinrichtung gelagert ist. Schließlich ist die Haltefedereinrichtung an einem dem ersten Ende gegenüberliegenden zweiten Ende zur bestimmungsgemäßen Befestigung lösbar an der Sensorhalteeinrichtung arretierbar.

Mit anderen Worten kann der Umfeldsensor des Fahrzeugs innerhalb des Aufnahmebereichs der Sensorhalteeinrichtung zumindest bereichsweise angeordnet werden. Unter einer zumindest bereichsweisen Anordnung des Umfeldsensors ist dabei eine Anordnung des Umfeldsensors in dem Aufnahmebereich der Sensorhalteeinrichtung zu verstehen, bei welcher der Umfeldsensor zumindest bereichsweise eingefasst, also von dem Aufnahmebereich zumindest bereichsweise umgeben, ist. Sofern der Umfeldsensor bestimmungsgemäß an der Sensorhalteeinrichtung befestigt ist, bzw. in dem Aufnahmebereich zumindest bereichsweise angeordnet ist, kann die Haltefedereinrichtung dazu verwendet werden, den Umfeldsensor in dem Aufnahmebereich mittels der Federkraft zu halten.

Das Lagerungselement der Haltefedereinrichtung, welches sich an dem ersten Ende der Haltefedereinrichtung befindet, ist drehbar an der Sensorhalteeinrichtung gelagert. Der Umfeldsensor kann somit besonders einfach montiert werden, da die Federkraft zum Halten des Umfeldsensors in dem Aufnahmebereich aufgrund der Drehbewegung einhändig aufgebracht werden kann. Die Haltefedereinrichtung kann an dem zweiten Ende zur bestimmungsgemäßen Befestigung lösbar an der Sensorhalteeinrichtung arretiert werden.

Ein Zwischenbereich der Haltefedereinrichtung, welcher sich zwischen dem ersten Ende und dem dem ersten Ende gegenüberliegenden zweiten Ende der Haltefedereinrichtung befindet, übt auf einen in dem Aufnahmebereich bestimmungsgemäß angeordneten Umfeldsensor eine Federkraft aus und hält den Umfeldsensor in der Sensorhalteeinrichtung bzw. in dem Aufnahmebereich der Sensorhalteeinrichtung. Dadurch kann aufgrund des sich ergebenden Hebels zudem eine hohe Federkraft im Rahmen des Montierens auf einfache Weise ausgeübt werden. Der Hebel bzw. die Hebelkraft ergibt sich dadurch, dass die Haltefedereinrichtung an dem ersten Ende drehbar gelagert ist und bei der Montage eine Kraft an dem dem ersten Ende gegenüberliegenden zweiten Ende aufgebracht wird. Die Haltefedereinrichtung kann dabei beispielsweise als Blattfeder, Torsionsfeder oder dergleichen ausgebildet sein.

Eine vorteilhafte Ausgestaltung der Befestigungsvorrichtung sieht vor, dass die Sensorhalteeinrichtung ein Drehachselement aufweist, welches zumindest bereichsweise von dem Lagerungselement umgeben ist. Das Drehachselement der Sensorhalteeinrichtung dient dabei der drehbaren Lagerung der Haltefedereinrichtung. Da das Lagerungselement der Haltefedereinrichtung das Drehachselement nur bereichsweise umgibt, ist ein einfaches Montieren der Haltefedereinrichtung an der Sensorhalteeinrichtung möglich. Mit anderen Worten kann die Haltefedereinrichtung mit dem am ersten Ende befindlichen Lagerungselement an der Sensorhalteeinrichtung - beispielsweise mittels Steckmontage oder mittels einer Rastverbindung - montiert werden. Folglich kann die Haltefedereinrichtung so auf besonders einfache Art und Weise montiert werden. Schließlich ist die Haltefedereinrichtung somit drehbar an der Sensorhalteeinrichtung gelagert. Ferner kann so über das Lagerungselement und den Zwischenbereich der Haltefedereinrichtung, welche die Federkraft auf den bestimmungsgemäß befestigten Umfeldsensor ausübt, eine Hebelwirkung, welche die Montage vereinfacht und die Stabilität des bestimmungsgemäß befestigten Umfeldsensors an der Sensorhalteeinrichtung erhöht, ausgeübt werden.

Darüber hinaus ist es vorteilhaft, wenn die Haltefedereinrichtung und die Sensorhalteeinrichtung korrespondierende Rastelemente aufweisen, welche zur lösbaren Arretierung der Haltefedereinrichtung an der Sensorhalteeinrichtung eine Rastverbindung ausbilden. Beispielsweise kann die Sensorhalteeinrichtung eine Einkerbung oder eine Aussparung als Rastelement aufweisen. Die Haltefedereinrichtung kann beispielsweise eine Erhebung bzw. einen Vorsprung als Rastelement aufweisen. In diesem Fall kann die Einkerbung bzw. die Aussparung zusammen mit der Erhebung bzw. dem Vorsprung eines der korrespondierenden Rastelemente bilden, wobei die Erhebung bzw. der Vorsprung zur lösbaren Arretierung der Haltefedereinrichtung in die Einkerbung bzw. die Aussparung der Sensorhalteeinrichtung greift. Im Zuge der Montage des Umfeldsensors in der Befestigungsvorrichtung ist es somit auf einfache Art und Weise möglich, die Federkraft zum Halten des Umfeldsensors in dem Aufnahmebereich der Sensorhalteeinrichtung aufzubringen und die Haltefedereinrichtung an der Sensorhalteeinrichtung mittels der Rastverbindung zu arretieren.

Eine weitere vorteilhafte Ausgestaltungsform der Befestigungsvorrichtung sieht vor, dass die korrespondierenden Rastelemente derart ausgebildet sind, dass diese die Rastverbindung nur dann ausbilden, falls die Federkraft eine vorbestimmte Mindestkraft überschreitet. Bei der Montage des Umfeldsensors kann es oftmals vorkommen, dass der Umfeldsensor zwar korrekt in dem Aufnahmebereich der Sensorhalteeinrichtung angeordnet ist, aber der montierende Mitarbeiter eine zu geringe Kraft auf die Haltefedereinrichtung ausübt. Infolgedessen kann es vorkommen, dass korrespondierende Rastelemente keine Rastverbindung ausbilden und die Haltefedereinrichtung den Umfeldsensor zur bestimmungsgemäßen Befestigung deshalb nicht in dem Aufnahmebereich mittels der Federkraft halten kann. Da die korrespondierenden Rastelemente jedoch keine Rastverbindung ausbilden, kann eine nicht korrekte Montage augenblicklich von dem Mitarbeiter erkannt werden. Mit anderen Worten kann so eine alternative und/oder eine zusätzliche Qualitätsprüfung in Form einer IO-Prüfung umgesetzt werden. Eine korrekte Montage kann somit auch im Rahmen einer Großserienproduktion sichergestellt werden.

Darüber hinaus kann es im Zuge der Montage des Umfeldsensors auch vorkommen, dass der Umfeldsensor zur bestimmungsgemäßen Befestigung nicht korrekt in dem Aufnahmebereich der Sensorhalteeinrichtung angeordnet ist. Demzufolge kann eine erhöhte Federkraft zur Arretierung der Haltefedereinrichtung an der Sensorhalteeinrichtung nötig sein. Aufgrund der erhöhten Federkraft kann folglich eine erhöhte Kraft auf die Rastverbindung ausgeübt werden. Überschreitet die Federkraft bzw. die erhöhte Kraft, welche auf die Rastverbindung ausgeübt wird, einen vorbestimmten Toleranzbereich, so kann sich die Rastverbindung unter Umständen auch lösen. Dadurch kann eine zusätzliche bzw. eine alternative fehlerhafte Montage des Umfeldsensors in der Befestigungsvorrichtung vermieden werden.

Weiterhin ist es vorteilhaft, wenn die Sensorhalteeinrichtung und/oder die Haltefedereinrichtung ein Hilfselement aufweist, welches dazu eingerichtet ist, die Rastverbindung zu lösen. Im Rahmen von Servicearbeiten bzw. um den Umfeldsensor auszubauen bzw. zu demontieren, ist es besonders vorteilhaft, wenn die Rastverbindung einfach und unkompliziert gelöst werden kann. Handelt es sich beispielsweise bei den korrespondierenden Rastelementen - wie zuvor exemplarisch beschrieben - um eine Einkerbung bzw. eine Aussparung an der Sensorhalteeinrichtung sowie eine Erhebung bzw. einen Vorsprung an der Haltefedereinrichtung, so kann beispielsweise an der Haltefedereinrichtung bzw. der Erhebung oder dem Vorsprung der Haltefedereinrichtung ein Hilfselement in Form eines Hebels angebracht werden, welcher dazu eingerichtet ist, die Erhebung bzw. den Vorsprung von der Einkerbung bzw. der Aussparung zu lösen. Kann die Erhebung bzw. der Vorsprung der Haltefedereinrichtung aus der Einkerbung bzw. der Aussparung der Sensorhalteeinrichtung gelöst werden, so kann die Rastverbindung einfach und unkompliziert gelöst werden. Zur Lösung der Rastverbindung sind - je nach Art der Rastverbindung - weitere Konstruktionen selbstverständlich ebenso denkbar.

Schließlich ist es vorteilhaft, wenn die drehbar gelagerte Haltefedereinrichtung zur bestimmungsgemäßen Befestigung des Umfeldsensors an der Sensorhalteeinrichtung einen Mindestdrehbereich zwischen 70° und 200°, bevorzugt zwischen 80° und 180°, aufweist. Mittels eines derartigen Mindestdrehbereichs kann sichergestellt werden, dass der Umfeldsensor im Zuge einer Montage auf besonders einfache Art und Weise in dem Aufnahmebereich der Sensorhalteeinrichtung anordenbar ist. Dabei gilt es zu beachten, dass ein derartiger Mindestdrehbereich gewisse Anforderungen an das Lagerungselement der Haltefedereinrichtung sowie ein eventuelles Drehachselement der Sensorhalteeinrichtung, welches zumindest bereichsweise von dem Lagerungselement umgeben ist, stellt. Beispielsweise kann eine einfach geclipste bzw. aufgesteckte Haltefedereinrichtung einen derartigen Mindestdrehbereich nicht gewährleisten. Mittels des Lagerungselements der Haltefedereinrichtung, eines eventuelles Drehachselement und einer geometrischen Gestaltung der Haltefedereinrichtung sowie der Sensorhalteeinrichtung kann ein vorgegebener Mindestdrehbereich realisiert werden. Dadurch kann der Umfeldsensor mittels überaus einfach durchzuführender Handgriffe in dem Aufnahmebereich der Sensorhalteeinrichtung angeordnet und bestimmungsgemäß befestigt werden. Folglich kann so insbesondere die Montage des Umfeldsensors vereinfacht werden.

Ein erfindungsgemäßes Sensorverbausystem für ein Fahrzeug umfasst eine erfindungsgemäße Befestigungsvorrichtung sowie einen Umfeldsensor, welcher in dem Aufnahmebereich angeordnet ist.

Die erfindungsgemäße Ausgestaltung des Sensorverbausystems sieht vor, dass die Sensorhalteeinrichtung der Befestigungsvorrichtung und der Umfeldsensor korrespondierende Ausrichtelemente aufweisen, welche mittels eines Poka-Yoke-Prinzips die bestimmungsgemäße Befestigung sicherstellen. Die korrespondierenden Ausrichtelemente sind in Form von Ausrichtstiften und zu den Ausrichtstiften korrespondierende Ausrichtöffnungen ausgebildet. Der Umfeldsensor bzw. das Gehäuse des Umfeldsensors weisen Ausrichtstifte auf. Wird der Umfeldsensor in dem Aufnahmebereich der Sensorhalteeinrichtung der Befestigungsvorrichtung angeordnet bzw. bestimmungsgemäß befestigt, so können sich die Ausrichtstifte in die Ausrichtöffnungen, welche an der Sensorhalteeinrichtung angebracht sind, einfügen. Die Anordnung der exemplarischen Ausrichtelement in Form von Ausrichtstiften und Ausrichtöffnungen ist ebenso auch andersherum denkbar. Beispielsweise ist es also auch denkbar, dass die Ausrichtstifte an der Sensorhalteeinrichtung angeordnet sind und die Ausrichtöffnungen an dem Umfeldsensor bzw. dem Gehäuse des Umfeldsensors angeordnet sind.

Die korrespondierenden Ausrichtelemente sind dabei stets so an der Befestigungsvorrichtung bzw. an dem Umfeldsensor angeordnet, dass sichergestellt werden kann, dass der Umfeldsensor bestimmungsgemäß befestigt ist und der Umfeldsensor folglich auch exakt ausgerichtet ist. Ferner kann so eine exakte Erfassung der Umgebung des Fahrzeugs sichergestellt werden. Die korrespondierenden Ausrichtelemente können folglich eine technische Vorkehrung bzw. Einrichtung zur Fehlerverhinderung während der Montage des Umfeldsensors bilden. Ein solches Prinzip wird auch Poka-Yoke-Prinzip oder Schlüssel-Schloss-Prinzip genannt.

Darüber hinaus begrenzen die korrespondierenden Ausrichtelemente zusammen mit der Haltefedereinrichtung der Befestigungsvorrichtung eine Bewegung des Umfeldsensors relativ zu der Sensorhalteeinrichtung in drei zueinander senkrechten Raumrichtungen. Beispielsweise ist es denkbar, dass ein erster Ausrichtstift und eine erste Ausrichtöffnung in Form eines Rundlochs die Bewegung des Umfeldsensors relativ zu der Sensorhalteeinrichtung in drei zueinander senkrechten Raumrichtungen begrenzt. Ein zweiter Ausrichtstift und eine zweite Ausrichtöffnung in Form eines Langlochs können zusätzlich eine Bewegung des Umfeldsensors relativ zu der Sensorhalteeinrichtung in zwei zueinander senkrechten Raumrichtungen begrenzen. Damit kann zusätzlich eine weitere der drei möglichen Rotationen verhindert werden. Zusätzliche Ausrichtelemente, beispielsweise in Form von Auflageflächen und Auflagepunkten, können eine Bewegung des Umfeldsensors relativ zu der Sensorhalteeinrichtung in einer weiteren Raumrichtung begrenzen. Folglich kann so letztendlich auch eine Rotation um die verbleibende Achse verhindert werden. Zusammen mit der Haltefedereinrichtung kann so eine Bewegung des Umfeldsensors relativ zu der Sensorhalteeinrichtung vollständig, also sowohl translatorisch als auch rotatorisch, begrenzt werden.

Insgesamt kann so zum einen eine bestimmungsgemäße Befestigung sichergestellt werden und zum anderen kann der Umfeldsensor in dem Aufnahmebereich der Befestigungsvorrichtung exakt ausgerichtet werden. Die korrespondierenden Ausrichtelemente können zudem sicherstellen, dass die Befestigungsvorrichtung einfach produziert werden kann und etwaige Fertigungstoleranzen, welche zu einer fehlerhaften Ausrichtung des Umfeldsensors führen können, ausgeglichen werden können. Je nach Ausführungsform der korrespondierenden Ausrichtelemente kann ferner sichergestellt werden, dass der Umfeldsensor nicht statisch überbestimmt angeordnet ist. Zudem kann unter Einhaltung vorgegebener Fertigungstoleranzen eine Montage bzw. eine bestimmungsgemäße Befestigung des Umfeldsensors im Aufnahmebereich sichergestellt werden. Darüber hinaus können verschiedenste Produktionsverfahren und Materialien zum Einsatz kommen. So können bei einer derartigen erfindungsgemäßen Befestigungsvorrichten bzw. den vorteilhaften Ausführungsformen davon auch Kunststoffe mit einem erhöhten Glasfaseranteil, beispielsweise von 30% oder mehr, zum Einsatz kommen.

Schließlich ist es vorteilhaft, wenn als der Umfeldsensor eine Kamera in dem Aufnahmebereich angeordnet ist. Mit anderen Worten kann der Umfeldsensor als Kamera ausgebildet sein. Insbesondere kann die Kamera als sogenannte Satellitenkamera ausgebildet sein. Unter der Bezeichnung "Satellitenkamera" ist hierbei eine Kamera zu verstehen, bei welcher das mit der Kamera verbundene Steuergerät an einer anderen Position als die Kamera verbaut ist. Es kann aber auch vorgesehen sein, dass der Umfeldsensor als optischer Sensor, Infrarot-Sensor, Lidar-Sensor oder dergleichen ausgebildet ist.

Ein weiterer Aspekt der Erfindung betrifft ein Fahrzeug umfassend ein erfindungsgemäßes Sensorverbausystem für ein Fahrzeug. Das Fahrzeug kann insbesondere als Personenkraftwagen ausgebildet sein.

Die mit Bezug auf die erfindungsgemäße Befestigungsvorrichtung vorgestellten bevorzugten Ausführungsformen und deren Vorteile gelten entsprechend für das erfindungsgemäße Sensorverbausystem sowie für das erfindungsgemäße Fahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs umfassend ein Sensorverbausystem,
- Fig. 2: eine Perspektivansicht einer Befestigungsvorrichtung für einen Umfeldsensor eines Fahrzeugs,
- Fig. 3: eine Perspektivansicht einer Haltefedereinrichtung einer Befestigungsvorrichtung für einen Umfeldsensor eines Fahrzeugs,
- Fig. 4: eine Perspektivansicht einer Befestigungsvorrichtung für einen Umfeldsensor eines Fahrzeugs, welcher korrespondierende Ausrichtelemente in Form von Ausrichtöffnungen aufweist,
- Fig. 5: eine Perspektivansicht eines Umfeldsensors in Form einer Kamera, welcher korrespondierende Ausrichtelemente in Form von Ausrichtstiften aufweist, und
- Fig. 6: eine Perspektivansicht eines Sensorverbausystems für ein Fahrzeug in einer weiteren Ausführungsform, welches zwei Umfeldsensoren aufnehmen kann.

In den Figuren werden gleiche oder funktionsgleiche Elemente mit den gleichen Bezugszeichen versehen.

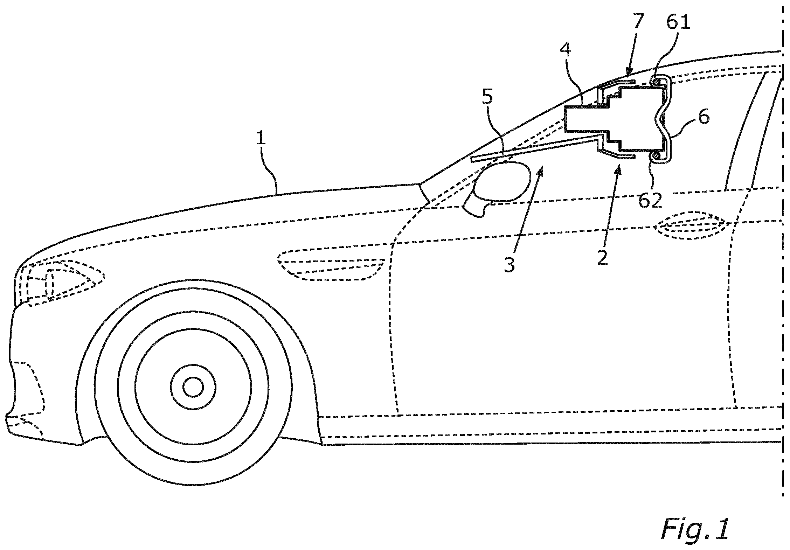

Fig. 1 zeigt in einer schematischen Darstellung ein Frontbereich eines Fahrzeugs 1, welches ein erfindungsgemäßes Sensorverbausystem 2 aufweist. Hierbei ist das Sensorverbausystem 2 hinter der Windschutzscheibe des Fahrzeugs 1 angeordnet. Das Sensorverbausystem 2 umfasst eine erfindungsgemäße Befestigungsvorrichtung 3 sowie einen Umfeldsensor 4. In dem vorliegenden Beispiel ist der Umfeldsensor 4 als Kamera ausgebildet. Es ist jedoch auch denkbar, dass der Umfeldsensor 4 ein Lidar-, Radar-, Infrarot-Sensor oder dergleichen ist.

Die Befestigungsvorrichtung 3 umfasst eine Sensorhalteeinrichtung 5 sowie eine Haltefedereinrichtung 6. In dem vorliegenden Beispiel ist die Haltefedereinrichtung 6 als Blattfeder ausgebildet. Es ist jedoch auch denkbar, dass die Haltefedereinrichtung 6 als Drahtbiegeteil, Torsionsfeder oder dergleichen ausgebildet ist. Die Sensorhalteeinrichtung 5 weist einen Aufnahmebereich 7 auf. Innerhalb des Aufnahmebereichs 7 kann der Umfeldsensor 4 bei einer bestimmungsgemäßen Befestigung an der Sensorhalteeinrichtung 5 zumindest bereichsweise angeordnet werden. Die Haltefedereinrichtung 6 ist dazu eingerichtet, den Umfeldsensor 4 zur bestimmungsgemäßen Befestigung in dem Aufnahmebereich 7 über eine Federkraft zu halten. Ein Teil der Sensorhalteeinrichtung 5 kann zudem als Streulichtblende ausgebildet sein.

Die Haltefedereinrichtung 6 weist an einem ersten Ende ein Lagerungselement 61 auf. Die Haltefedereinrichtung 6 ist mittels des Lagerungselements 61 drehbar an der Sensorhalteeinrichtung 5 gelagert. An einem dem ersten Ende der Haltefedereinrichtung 6 gegenüberliegenden zweiten Ende weist die Haltefedereinrichtung 6 ein Rastelement 62 auf. Das Rastelement 62 dient der lösbaren Arretierung der Haltefedereinrichtung 6 an der Sensorhalteeinrichtung 5. Hierzu weist die Sensorhalteeinrichtung 5 ein korrespondierendes Rastelement 62' auf.

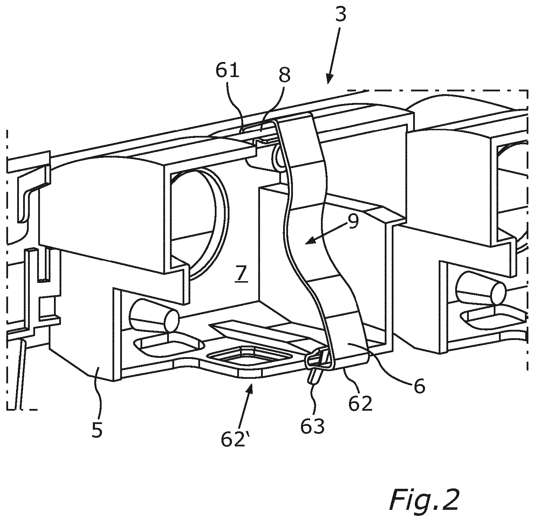

Fig. 2 zeigt eine Perspektivansicht der Befestigungsvorrichtung 3 für einen Umfeldsensor 4 eines Fahrzeugs 1 im Detail. Fig. 2 zeigt neben der Sensorhalteeinrichtung 5 und der Haltefedereinrichtung 6 ein Drehachselement 8 der Sensorhalteeinrichtung 5. Das Drehachselement 8 ist hierbei zumindest bereichsweise von dem Lagerungselement 61 umgeben. Die Haltefedereinrichtung 6 mit dem am ersten Ende befindlichen Lagerungselement 61 kann so an der Sensorhalteeinrichtung 5 - beispielsweise mittels Steckmontage - montiert werden. Folglich kann die Haltefedereinrichtung 6 so auf besonders einfache Art und Weise montiert werden. Aufgrund einer derartig drehbaren Lagerung der Haltefedereinrichtung 6 an der Sensorhalteeinrichtung 5 kann die Haltefedereinrichtung 6 geschwenkt werden, wodurch die Montage des Umfeldsensors 4 vereinfacht werden kann.

Zur lösbaren Arretierung der Haltefedereinrichtung 6 an der Sensorhalteeinrichtung 5 mittels des Rastelements 62 weist die Sensorhalteeinrichtung 5 ein korrespondierendes Rastelement 62' auf, welches als Öffnung ausgebildet ist. Befindet sich der Umfeldsensor 4 zur bestimmungsgemäßen Befestigung an der Sensorhalteeinrichtung 5 in dem Aufnahmebereich 7, so kann der Umfeldsensor 4 mittels der Haltefedereinrichtung 6 über eine Federkraft in dem Aufnahmebereich 7 gehalten werden. Zur lösbaren Arretierung der Haltefedereinrichtung 6 an der Sensorhalteeinrichtung 5 kann eine Rastverbindung mittels des Rastelements 62 sowie des korrespondierenden Rastelements 62' ausgebildet werden.

Ein Zwischenbereich 9 der Haltefedereinrichtung 6, welcher sich zwischen dem ersten Ende und dem dem ersten Ende gegenüberliegenden zweiten Ende der Haltefedereinrichtung 6 befindet, kann auf einen im Aufnahmebereich 7 bestimmungsgemäß angeordneten Umfeldsensor 4 eine Federkraft ausüben. Dadurch kann der Umfeldsensor 4 in der Sensorhalteeinrichtung 5 bzw. in dem Aufnahmebereich 7 der Sensorhalteeinrichtung 5 gehalten werden. Zudem kann aufgrund des sich ergebenden Hebels eine hohe Federkraft auf einfache Art und Weise ausgeübt werden.

Die Haltefedereinrichtung 6 kann zudem ein Hilfselement 63 aufweisen. In dem vorliegenden Beispiel ist das Hilfselement 63 im Bereich des Rastelements 62 der Haltefedereinrichtung 6 angeordnet. Das Hilfselement 63 ist dazu eingerichtet, die Rastverbindung, welche mittels des Rastelements 62 sowie des korrespondierenden Rastelements 62' ausgebildet werden kann, manuell zu lösen. Somit kann ein Umfeldsensor 4 im Rahmen von Servicearbeiten oder dergleichen einfach und unkompliziert ausgebaut werden.

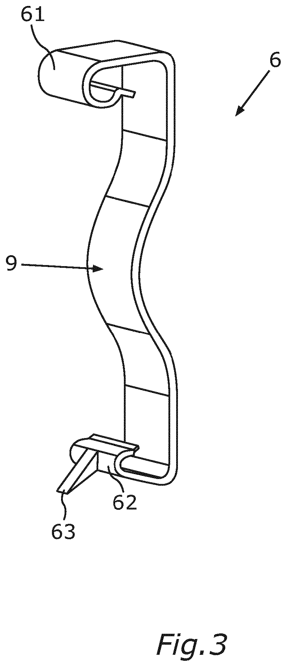

Fig. 3 zeigt eine Konstruktionszeichnung der Haltefedereinrichtung 6 der Befestigungsvorrichtung 3 für den Umfeldsensor 4 des Fahrzeugs 1, welche auch in der Perspektivansicht von Fig. 2 zu sehen ist. In diesem Beispiel ist die Haltefedereinrichtung als Blattfeder ausgebildet. Zudem ist dargestellt, wie das Lagerungselement 61, welches das Drehachselement 8 der Sensorhalteeinrichtung 5 zumindest bereichsweise umgibt, ausgebildet sein kann. Darüber hinaus ist das Rastelement 62, welches an dem dem ersten Ende gegenüberliegenden zweiten Ende der Haltefedereinrichtung 6 angeordnet sein kann, im Detail dargestellt. In dem Bereich des Rastelements 62 kann zudem ein Hilfselement 63 angeordnet sein. Wie in der Konstruktionszeichnung dargestellt, kann das Hilfselement 63 mittels einer Hebelwirkung die Rastverbindung lösen. Die Haltefedereinrichtung 6 weist zudem einen Zwischenbereich 9 auf. Der Zwischenbereich 9 kann dabei der Kraftübertragung dienen. Mit anderen Worten kann der Zwischenbereich 9 an dem Umfeldsensor 4 anliegen und den Umfeldsensor 4 zur bestimmungsgemäßen Befestigung in dem Aufnahmebereich 7 der Sensorhalteeinrichtung 5 über eine Federkraft halten.

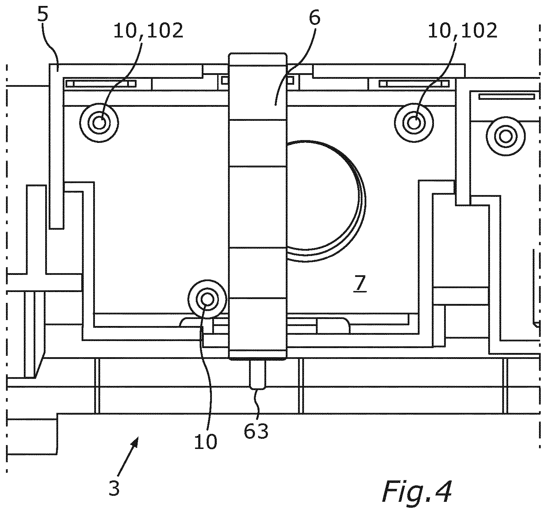

Fig. 4 zeigt eine Perspektivansicht der Befestigungsvorrichtung 3 für den Umfeldsensor 4 des Fahrzeugs 1 gemäß Fig. 2 aus einer anderen Perspektive. Die Sensorhalteeinrichtung 5 der Befestigungsvorrichtung 3 und der Umfeldsensor 4 weist korrespondierende Ausrichtelemente 10 auf, welche mittels eines Poka-Yoke-Prinzips die bestimmungsgemäße Befestigung sowie die exakte Ausrichtung des Umfeldsensors 4 sicherstellen. Die Sensorhalteeinrichtung 5 weist innerhalb des Aufnahmebereichs 7 Ausrichtöffnungen 102 auf. Diese Ausrichtöffnungen 102 können in Form eines Rundlochs und eines Langlochs ausgebildet sein. Dadurch kann sichergestellt werden, dass der Umfeldsensor 4 bei der bestimmungsgemäßen Befestigung in dem Aufnahmebereich 7 der Sensorhalteeinrichtung 5 nicht mechanisch überbestimmt angeordnet ist. Zudem kann unter Einhaltung vorgegebener Fertigungstoleranzen eine bestimmungsgemäße Befestigung des Umfeldsensors 4 in dem Aufnahmebereich 7 sichergestellt werden.

Die Ausrichtelemente 10 können sicherstellen, dass der Umfeldsensor 4 zur bestimmungsgemäßen Befestigung an der Sensorhalteeinrichtung 5 korrekt angeordnet ist. Dazu können die korrespondierenden Ausrichtelemente 10, welche an dem Umfeldsensor 4 angebracht sein können, in die Ausrichtelemente 10 der Sensorhalteeinrichtung 5 greifen. Sofern der Umfeldsensor 4 bestimmungsgemäß in dem Aufnahmebereich 7 der Sensorhalteeinrichtung 5 angeordnet ist, kann die Haltefedereinrichtung 6 lösbar an der Sensorhalteeinrichtung 5 arretiert werden. Die Haltefedereinrichtung 6 übt dabei eine Federkraft auf den Umfeldsensor 4 zur bestimmungsgemäßen Befestigung in dem Aufnahmebereich 7 aus. Bei der Montage des Umfeldsensors 4 kann es gegebenenfalls vorkommen, dass der Umfeldsensor 4 zwar korrekt in dem Aufnahmebereich 7 der Sensorhalteeinrichtung 5 angeordnet ist, aber der montierende Mitarbeiter eine zu geringe Kraft auf die Haltefedereinrichtung 6 ausübt. Aufgrund dessen kann es vorkommen, dass die korrespondierenden Rastelemente 10 keine Rastverbindung ausbilden und die Haltefedereinrichtung 6 den Umfeldsensor 4 zur bestimmungsgemäßen Befestigung deshalb nicht in dem Aufnahmebereich 7 mittels der Federkraft halten kann. Da die korrespondierenden Rastelemente 10 jedoch keine Rastverbindung ausbilden, kann eine nicht korrekte Montage augenblicklich von dem Mitarbeiter erkannt werden. Es kann so also eine zusätzliche Qualitätsprüfung im Rahmen der Montage umgesetzt werden.

Eine fehlerhafte Anordnung des Umfeldsensors 4 in dem Aufnahmebereich 7 der Sensorhalteeinrichtung 5 kann beispielsweise auch dann eintreten, wenn die korrespondierenden Ausrichtelemente 10 der Sensorhalteeinrichtung 5 und des Umfeldsensors 4 aufgrund von Schmutz, Ablagerungen und/oder dergleichen nicht korrekt ineinandergreifen. Dies kann bei einer Montage des Umfeldsensors 4 dazu führen, dass eine höhere Federkraft erforderlich ist, um die Haltefedereinrichtung 6 an der Sensorhalteeinrichtung 5 zu arretieren. In einem derartigen Fall kann folglich eine erhöhte Kraft auf die Rastverbindung bzw. auf die korrespondierenden Rastelemente 62, 62' ausgeübt werden. Um derartige fehlerhafte Montagen zu vermeiden, können die korrespondierenden Rastelemente 62, 62' auch derart ausgebildet sein, dass sich die Rastverbindung löst, falls eine derartige Federkraft bzw. erhöhte Kraft einen vorbestimmten Toleranzbereich überschreitet.

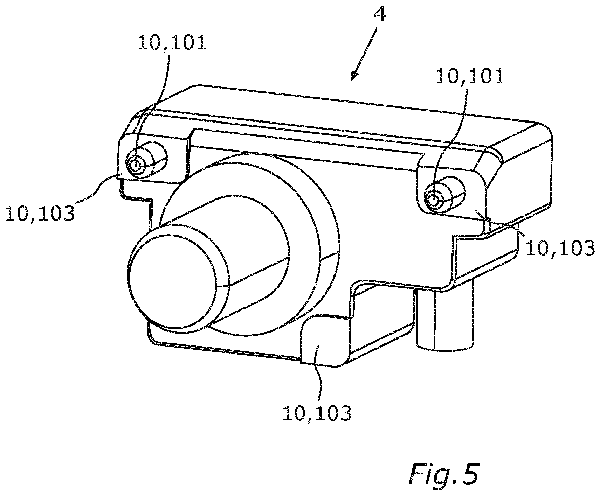

Fig. 5 zeigt eine Perspektivansicht eines exemplarischen Umfeldsensors 4, welcher in dem Aufnahmebereich 7 der Sensorhalteeinrichtung 5 zur bestimmungsgemäßen Befestigung an der Sensorhalteeinrichtung 5 zumindest bereichsweise anordenbar ist. In diesem Beispiel ist der Umfeldsensor 4 als Kamera ausgebildet. Der Umfeldsensor 4 weist Ausrichtelemente 10 auf. Die Ausrichtelemente 10 sind in Form von zwei Ausrichtstiften 101 sowie in Form von drei Ausrichtanschlägen 103 dargestellt. Die Ausrichtelemente 10 des Umfeldsensors 4 können dabei in die korrespondierenden Ausrichtelemente 10 der Sensorhalteeinrichtung 5, welche in diesem Fall in Form von Ausrichtöffnungen 102 ausgebildet sein können, greifen.

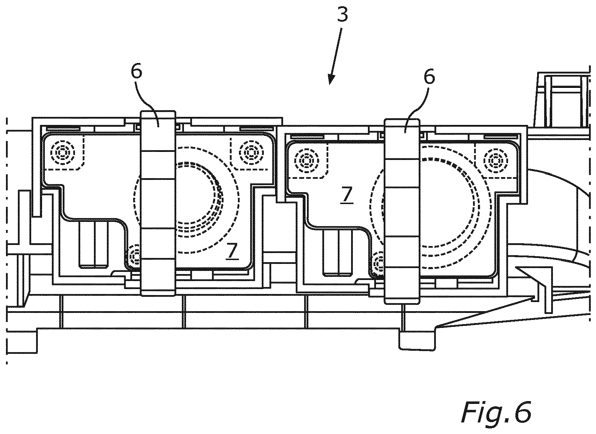

Fig. 6 zeigt eine Perspektivansicht einer möglichen Ausführungsform einer erfindungsgemäßen Befestigungsvorrichtung 3 für einen Umfeldsensor 4 eines Fahrzeugs 1. Die Befestigungsvorrichtung 3 kann dabei derart ausgebildet sein, dass zwei Umfeldsensoren 4 in einem jeweiligen dafür vorgesehenen Aufnahmebereich 7 angeordnet werden können. Dabei kann es sich sowohl um Umfeldsensoren 4 identischen Typs handeln als auch um Umfeldsensoren 4 verschiedenen Typs. Mit anderen Worten ist es denkbar, dass beispielsweise ein Lidar-Sensor in dem einen Aufnahmebereich 7 angeordnet wird und eine Kamera in dem anderen Aufnahmebereich 7 angeordnet wird. Ebenso ist es jedoch auch denkbar, dass beispielsweise zwei Kameras oder zwei Objektive einer Stereokamera in dem Aufnahmebereich 7 der Sensorhalteeinrichtung 5 der Befestigungsvorrichtung 3 anordenbar sind. Eine derartige Ausführungsform ist insbesondere dann vorteilhaft, wenn beispielsweise aufgrund immer umfangreicherer Fahrerassistenzsysteme mehrere Kameras für verschiedene Einsatzbereiche zur Anwendung kommen.

## Patentansprüche

1. Sensorverbausystem (2) für ein Fahrzeug (1), umfassend:
- eine Befestigungsvorrichtung (3) für einen Umfeldsensor (4) eines Fahrzeugs (1), umfassend:
▪ eine Sensorhalteeinrichtung (5) mit einem Aufnahmebereich (7), in welchem der Umfeldsensor (4) bei einer bestimmungsgemäßen Befestigung an der Sensorhalteeinrichtung (5) zumindest bereichsweise anordenbar ist,
▪ eine Haltefedereinrichtung (6), welche dazu eingerichtet ist, den Umfeldsensor (4) zur bestimmungsgemäßen Befestigung in dem Aufnahmebereich (7) über eine Federkraft zu halten,
▪ wobei die Haltefedereinrichtung (6) an einem ersten Ende ein Lagerungselement (61) aufweist, mittels welchem die Haltefedereinrichtung (6) drehbar an der Sensorhalteeinrichtung (5) gelagert ist, und
▪ die Haltefedereinrichtung (6) an einem dem ersten Ende gegenüberliegenden zweiten Ende zur bestimmungsgemäßen Befestigung lösbar an der Sensorhalteeinrichtung (5) arretierbar ist;
und
- einen Umfeldsensor (4), welcher in dem Aufnahmebereich (7) der Befestigungsvorrichtung (3) angeordnet ist, wobei die Sensorhalteeinrichtung (5) der Befestigungsvorrichtung (3) und der Umfeldsensor (4) korrespondierende Ausrichtelemente (10) aufweisen, welche mittels eines Poka-Yoke-Prinzips einer Fehlerverhinderung während der Montage des Umfeldsensors dienen und die bestimmungsgemäße Befestigung sicherstellen;
**dadurch gekennzeichnet, dass**
- die korrespondierenden Ausrichtelemente (10) durch
▪ zwei Ausrichtstifte (101) und zwei korrespondierende Ausrichtöffnungen (102), und
▪ drei Ausrichtanschläge (103)
ausgebildet sind, und
- die korrespondierenden Ausrichtelemente (10) zusammen mit der Haltefedereinrichtung (6) der Befestigungsvorrichtung (3) eine Bewegung des Umfeldsensors (4) relativ zu der Sensorhalteeinrichtung (5) in drei zueinander senkrechten Raumrichtungen begrenzen.

2. Sensorverbausystem (2) nach einem Anspruch 1,
**dadurch gekennzeichnet, dass**
die Sensorhalteeinrichtung (5) ein Drehachselement (8) aufweist, welches zumindest bereichsweise von dem Lagerungselement (61) umgeben ist.

3. Sensorverbausystem (2) nach einem Anspruch 1 oder 2,
**dadurch gekennzeichnet, dass**
die Haltefedereinrichtung (6) und die Sensorhalteeinrichtung (5) korrespondierende Rastelemente (62, 62') aufweisen, welche zur lösbaren Arretierung der Haltefedereinrichtung (6) an der Sensorhalteeinrichtung (5) eine Rastverbindung ausbilden.

4. Sensorverbausystem (2) nach einem der vorhergehenden Ansprüche,
**dadurch gekennzeichnet, dass**
die korrespondierenden Rastelemente (62, 62') derart ausgebildet sind, dass diese die Rastverbindung nur dann ausbilden, falls die Federkraft eine vorbestimmte Mindestkraft überschreitet.

5. Sensorverbausystem (2) nach einem der Ansprüche 3 oder 4,
**dadurch gekennzeichnet, dass**
die Sensorhalteeinrichtung (5) und/oder die Haltefedereinrichtung (6) ein Hilfselement (63) aufweist, welches dazu eingerichtet ist, die Rasterverbindung zu lösen.

6. Sensorverbausystem (2) nach einem der vorhergehenden Ansprüche,
**dadurch gekennzeichnet, dass**
die drehbar gelagerte Haltefedereinrichtung (6) zur bestimmungsgemäßen Befestigung des Umfeldsensors (4) an der Sensorhalteeinrichtung (5) einen Mindestdrehbereich zwischen 70° und 200°, bevorzugt zwischen 80° und 180°, aufweist.

7. Sensorverbausystem (2) nach einem der vorhergehenden Ansprüche,
**dadurch gekennzeichnet, dass**
als der Umfeldsensor (4) eine Kamera in dem Aufnahmebereich (7) angeordnet ist.

## Claims

1. Sensor installation system (2) for a vehicle (1), comprising:
- a fastening device (3) for a surround sensor (4) of a vehicle (1), comprising:
■ a sensor holding device (5) having a receptacle region (7), in which at least regions of the surround sensor (4) are arrangeable when the surround sensor is fastened to the sensor holding device (5) as intended,
■ a holding spring device (6) which is configured to hold the surround sensor (4) by way of a spring force, for the purpose of fastening said surround sensor in the receptacle region (7) as intended,
■ wherein at a first end the holding spring device (6) comprises a bearing element (61) by means of which the holding spring device (6) is rotatably mounted on the sensor holding device (5), and
■ at a second end opposite to the first end the holding spring device (6) is releasably fixable to the sensor holding device (5), for the purpose of fastening as intended;
and
- a surround sensor (4) arranged in the receptacle region (7) of the fastening apparatus (3), wherein the sensor holding device (5) of the fastening apparatus (3) and the surround sensor (4) comprise corresponding alignment elements (10), which serve for preventing errors during the assembly of the surround sensor and ensure the fastening as intended by means of a poka-yoke principle;
**characterized in that**
- the corresponding alignment elements (10) are formed by
■ two alignment pins (101) and two corresponding alignment openings (102), and
■ three alignment stops (103)
and
- together with the holding spring device (6) of the fastening apparatus (3), the corresponding alignment elements (10) restrict a movement of the surround sensor (4) relative to the sensor holding device (5) in three mutually perpendicular spatial directions.

2. Sensor installation system (2) according to Claim 1,
**characterized in that**
the sensor holding device (5) comprises a pivot element (8), at least regions of which are surrounded by the bearing element (61).

3. Sensor installation system (2) according to Claim 1 or 2,
**characterized in that**
the holding spring device (6) and the sensor holding device (5) comprise corresponding latching elements (62, 62') which form a latching connection for the purpose of releasably fixing the holding spring device (6) to the sensor holding device (5).

4. Sensor installation system (2) according to any of the preceding claims,
**characterized in that**
the corresponding latching elements (62, 62') are designed such that these only form the latching connection if the spring force exceeds a predetermined minimum force.

5. Sensor installation system (2) according to either of Claims 3 and 4,
**characterized in that**
the sensor holding device (5) and/or the holding spring device (6) comprises an auxiliary element (63) which is configured to release the latching connection.

6. Sensor installation system (2) according to any of the preceding claims,
**characterized in that**
for fastening the surround sensor (4) to the sensor holding device (5) as intended, the rotatably mounted holding spring device (6) has a minimum rotary range of between 70° and 200°, preferably between 80° and 180°.

7. Sensor installation system (2) according to any of the preceding claims,
**characterized in that**
as the surround sensor (4), a camera is arranged in the receptacle region (7).

## Revendications

1. Système d'installation de capteur (2) pour un véhicule (1), comprenant :
- un dispositif de fixation (3) pour un capteur d'environnement (4) d'un véhicule (1), comprenant :
■ un dispositif de maintien de capteur (5) doté d'une zone de réception (7) dans laquelle le capteur d'environnement (4) peut être disposé au moins partiellement lors d'une fixation conforme au dispositif de maintien de capteur (5),
■ un dispositif à ressort de maintien (6) qui est conçu pour maintenir le capteur d'environnement (4) dans la zone de réception (7) par une force de ressort pour une fixation conforme,
■ le dispositif à ressort de maintien (6) présentant à une première extrémité un élément de palier (61) au moyen duquel le dispositif à ressort de maintien (6) est monté de manière rotative sur le dispositif de maintien de capteur (5), et
■ le dispositif à ressort de maintien (6) étant verrouillable de manière amovible à une seconde extrémité opposée à la première extrémité sur le dispositif de maintien de capteur (5) pour une fixation conforme ;
et
- un capteur d'environnement (4), qui est disposé dans la zone de réception (7) du dispositif de fixation (3), le dispositif de maintien de capteur (5) du dispositif de fixation (3) et le capteur d'environnement (4) présentant des éléments d'alignement correspondants (10) qui servent à la prévention des erreurs lors du montage du capteur d'environnement au moyen d'un principe Poka-Yoke et assurent une fixation conforme ;
**caractérisé en ce que**
- les éléments d'alignement correspondants (10) sont réalisés par
■ deux broches d'alignement (101) et deux ouvertures d'alignement correspondantes (102), et
■ trois butées d'alignement (103)
et
- les éléments d'alignement correspondants (10) limitent, conjointement avec le dispositif à ressort de maintien (6) du dispositif de fixation (3), un mouvement du capteur d'environnement (4) par rapport au dispositif de maintien de capteur (5) dans trois directions spatiales mutuellement perpendiculaires.

2. Système d'installation de capteur (2) selon la revendication 1,
**caractérisé en ce que**
le dispositif de maintien de capteur (5) présente un élément d'axe de rotation (8) qui est entouré au moins partiellement par l'élément de palier (61).

3. Système d'installation de capteur (2) selon la revendication 1 ou 2,
**caractérisé en ce que**
le dispositif à ressort de maintien (6) et le dispositif de maintien de capteur (5) présentent des éléments d'encliquetage correspondants (62, 62') qui forment une liaison par encliquetage pour le verrouillage amovible du dispositif à ressort de maintien (6) sur le dispositif de maintien de capteur (5).

4. Système d'installation de capteur (2) selon l'une quelconque des revendications précédentes,
**caractérisé en ce que**
les éléments d'encliquetage correspondants (62, 62') sont conçus de telle sorte qu'ils ne réalisent la liaison par encliquetage que si la force de ressort dépasse une force minimale prédéterminée.

5. Système d'installation de capteur (2) selon l'une quelconque des revendications 3 ou 4,
**caractérisé en ce que**
le dispositif de maintien de capteur (5) et/ou le dispositif à ressort de maintien (6) présente un élément auxiliaire (63) qui est conçu pour libérer la liaison par encliquetage.

6. Système d'installation de capteur (2) selon l'une quelconque des revendications précédentes,
**caractérisé en ce que**
le dispositif à ressort de maintien (6) monté de manière rotative présente, pour la fixation conforme du capteur d'environnement (4) sur le dispositif de maintien de capteur (5), une plage de rotation minimale comprise entre 70° et 200°, de préférence entre 80° et 180°.

7. Système d'installation de capteur (2) selon l'une quelconque des revendications précédentes,
**caractérisé en ce que**
une caméra est disposée dans la zone de réception (7) en tant que capteur d'environnement (4).
